# EUROPÄISCHE PATENTANMELDUNG

(11) **EP 2 196 529 A1**
(43) Veröffentlichungstag der Anmeldung: **16.06.2010**
(21) Anmeldenummer: 09178249.0
(22) Anmeldetag: 08.12.2009
(51) Int. Cl.: C11D 11/00, B29C 47/08

(54) **Reinigungsmittel**

(30) Priorität: 09.12.2008 DE 102008061171
(71) Anmelder: Münch Chemie International GmbH, 69469 Weinheim (DE)
(72) Erfinder: Drossmann, Sebastian, 69469, Weinheim (DE); Münch, Michael, 69488, Birkenau (DE)
(74) Vertreter: Meissner, Bolte & Partner

(57) **Zusammenfassung**

Die Erfindung betrifft ein Reinigungsmittel zur Reinigung von Extrudern und das die folgenden Komponenten aufweist:
A) wenigstens ein künstliches und/oder natürliches Mineral;
B) wenigstens eine organische Säure und/ oder wenigstens eine anorganische Base,
wobei die organische Säure aus der Gruppe ausgewählt ist, die folgendes umfasst: Dialkylmalonsäure; aliphatische Mono-, Di- und Tricarbonsäuren, insbesondere Stearinsäure, Tartronsäure, Zitronensäure; organische Alkylsulfonsäuren und/oder organische phenylsubstituierte Sulfonsäuren; Mischungen vorgenannter Säuren; und
C) wenigstens einen Synthesekautschuk,
wobei die Komponenten A), B) und C) zunächst miteinander vollständig vermischt und in einem nachfolgenden Schritt durch Verdichten unter Wärmeeinwirkung, insbesondere Compoundieren, in ein homogenes Granulat überführt werden.

Diese Komponenten liegen in einem Mischungsverhältnis Komponente A) zu B) zu C) von 1 - 70 : 0,1 - 25 : 98.9 - 5 Gew.-%, im bevorzugten Fall 5 - 65 : 0,5 - 20 : 94,5 - 15 Gew.-% und im besonders bevorzugten Fall 10 - 60 : 1 - 15 : 98 - 25 Gew.-% betragen, wobei die Summe der Mischungskomponenten immer 100 Gew.-% ergibt.

Ferner betrifft die Erfindung eine Verwendung des Reinigungsmittels.

## Beschreibung

Die Erfindung betrifft ein Reinigungsmittel zur Reinigung von Extruder und Spritzgussmaschinen, gemäß dem Oberbegriff des Patentanspruchs 1 sowie eine Verwendung des Reinigungsmittels gemäß dem Oberbegriff des Patentanspruchs 11.

Aus der Praxis ist bekannt, dass bei der Verarbeitung von Thermoplasten auf Spritzgussmaschinen und Extrudern beim Materialwechsel oder beim Farbwechsel große Reinigungsprobleme auftauchen. Diese sind in aller Regel durch eine ungenügende Mischbarkeit eines extrudierten Polymers mit einem nachfolgend zu extrudierenden Polymer begründet. Auf Grund dessen fallen bei vorgenannten Arbeiten hohe Reinigungs- und Materialkosten an.

Dies ist umso problematischer, wenn eine Materialfolge beispielsweise von einem polaren Polymer zu einem unpolaren Polymer stattfindet. Darüber bereiten auch amorphe Polymere und nachfolgende teilkristalline Polymere Schwierigkeiten, da diese nicht immer miteinander mischbar sind. Ein weiteres Problem hinsichtlich einer Materialfolge besteht, wenn ausgehend von einer dunklen Einfärbung Farbfolgen in Richtung einer helleren Einfärbung oder in Richtung transparentes Material zu verarbeiten sind.

Um, insbesondere in solchen Fällen, eine gute Reinigung eines Extruder oder einer Spritzgussmaschine zu erreichen, muss die Maschine oder der, beispielsweise Schneckenextruder, zerlegt und die dazu gehörenden Schnecken, Spritzdüsen und Nadelverschlussdüsen mühsam und gegebenenfalls von Hand gereinigt werden, wobei die Schnecken gezogen und mechanisch mit einem Sandstrahlgerät oder Schleifgerät gereinigt werden. Hieraus resultieren lange Stillstandszeiten und ein hoher personeller Aufwand, der hohe Kosten verursacht.

Aus der WO 00/37236 ist ein Verfahren zur Reinigung von Extrudern bekannt, bei dem eine Reinigungsmasse zum Einsatz kommt, bestehend aus diskreten, plastisch deformierbaren Teilchen aus einem Thermoplast (A) mit einem Schmelzpunkt über 200°C und einer Kristallinität von kleiner oder gleich 50% und einem amorphen oder teilkristallinen Thermoplast (B) mit einer Verarbeitungstemperatur, die unterhalb des Schmelzpunktes des Thermoplasts (A) liegt. Der Thermoplast (A) ist in der Reinigungsmasse mit 1 Gew.-% bis 95 Gew.-% und der Thermoplast (B) mit 5 Gew.-% bis 95 Gew.-% enthalten. Die gewichtsprozentualen Anteile von (A) und (B) ergänzen sich jeweils zu 100% oder weniger. Die diskreten, plastisch deformierbaren Teilchen aus dem Thermoplast (A) wirken hierbei reinigend, während der amorphe oder teilkristalline Thermoplast (B) als flüssiger oder fließfähiger Träger für die plastisch deformierbaren Teilchen aus dem Thermoplast (A) und/oder abgelöste Verunreinigungen wirkt.

Nachteilig bei diesem Verfahren ist, dass der Thermoplast (A) sehr klein gemahlen sein muss, damit er nicht die Düse oder den Heizkanal am Spritzgusswerkzeug zusetzt. In dortiger Druckschrift ist der Einsatz des Thermoplast (A) als zylinder- oder linsenförmiges Granulat mit einem Durchmesser von 1 mm bis 6 mm und einer Länge von 8 mm beschrieben. In der Praxis verstopfen solche unaufgeschmolzenen Granulate allerdings in nachteiliger Weise den Düsenkopf und/oder die Verschlussdüse eines Extruders oder einer Spritzgussmaschine, was auch als Vergleichsbeispiel beschrieben ist.

Die Offenlegungsschrift WO 95/17268 beschreibt eine abrasive und reinigende Mischung aus: (a) einer überwiegenden Menge eines abrasivem Pulvers und (b) wenigstens einem Harz, das aus der Gruppe ausgewählt ist, die ein Polymer eines Diens, ein Harz-Material, ein Cumaron-Inden-Harz, und eine Mischung von zwei oder mehreren dieser Stoffe, und (c) wenigstens ein Copolymer von einem Olefin und einem Acrylat oder einem Methylacrylat aufweist.

Der Nachteil dieses Verfahrens ist, dass die in (b) und (c) genannten Polymere nicht mit allen nachfolgend zu verarbeitenden Polymeren mischbar sind. In den Reinigungsmischungen werden die einzelnen Polymere mit den abrasiven Mischungen der dort beschriebenen Beispiele abgemischt, damit dann anschließend in der gleichen Polymerbasis weitergearbeitet werden kann. Die Maschinen sind durch die Reinigungsmischung von fremden Verunreinigungen wie Farbresten und Verbrennungen gereinigt, jedoch verbleiben Spuren der Reinigungsmischung in der Maschine, welche die nachfolgend zu verarbeitende Polymere verunreinigen. Dies führt in nachteiliger Weise zu Schlieren- und/oder Laminatbildung.

Die DE 103 34 293 A1 offenbart eine Reinigungszusammensetzung für kunststoffverarbeitende Maschinen sowie ein Verfahren und eine Anwendung für die Reinigungszusammensetzung bestehend aus: 1 Gew.-% bis 18 Gew.-% Wasser, 10 Gew.-% bis 50 Gew.-% einer Mischung, bestehend aus 1 Gew.-% bis 50 Gew.-% anionischer Tenside, mindestens 15 Gew.-% nichtionischer Tenside, mindestens 1 Gew.-% Seife, Polycarboxylate, Zeolithe, Natriumsulfat, Bicarbonat, Phosphonate, Schaumregulatoren, gegebenenfalls Hilfsstoffe, Duftstoffe und auf 100 Gew.-% aufgefüllt bestimmte Polymere enthält. Ferner offenbart die DE 103 34 293 A1 ein Verfahren zur Herstellung der Mischung und deren Verwendung.

Die Offenlegungsschrift DE 42 02 618 A1 offenbart eine Reinigungszusammensetzung für eine Harzformgebungsvorrichtung, welche 50 Gew.-% bis 95 Gew.-% eines Polyolefinharzes mit einem Schmelzindex von 0,01 bis 0,5, ferner 0,1 Gew.-% bis 15 Gew.-% eines Acryl-Copolymeren, 2 Gew.-% bis 30 Gew.-% eines Neutralsalzes einer organischen Sulfonsäure und 0,1 Gew.-% bis 10 Gew.-% basisches Magnesiumcarbonat, Magnesiumhydroxid, Kaliumcarbonat, Zinkcarbonat oder eine Mischung aus zwei oder mehreren Komponenten davon umfasst.

Den beiden vorgenannten Schriften liegt der Nachteil zugrunde, dass die Maschinen von fremden Verunreinigungen wie Farbresten und Verbrennungen gereinigt sind, jedoch Spuren der Reinigungsmischung in der Maschine verbleiben, durch welche die nachfolgend zu verarbeitende Polymere wieder verunreinigt werden. Dies wirkt sich in einer nicht akzeptablen Schlieren- oder Schieferbildung aus.

Die DE 195 54 863 A1 offenbart ein Verfahren zur Herstellung unterschiedlicher Farbpellets und eine Vorrichtung zur Durchführung des Verfahrens. Dieses Verfahren arbeitet mit zwei separaten Granulatoren für unterschiedliche Farbpellets, sowie einer komplizierten Austragsöffnung am Extruderkopf. Ein maßgeblicher Nachteil der dort beschriebenen Vorgehensweise ist der hohe maschinelle Aufwand, der zum Farbwechsel eines Polymers betrieben werden muss. Dieser Aufwand ist mit hohen Investitionskosten verbunden.

Die Aufgabe der vorliegenden Erfindung ist es daher ein staubfreies, kostengünstiges und einfach herstellbares Reinigungsmittel für die Reinigung von Extrudern und Spritzgussmaschinen sowie dessen Verwendung zur Verfügung zu stellen, mit dem die oben genannten Nachteile und Einschränkungen vermieden werden. Der Vorteil gegenüber dem Stand der Technik soll sein, dass die Extruder und Spritzgussmaschinen ohne mechanischen Aufwand, wie Schneckenziehen, Sandstrahlung, Schleifen, und in einer kurzen Zeitspanne zu reinigen sind.

Diese Aufgabe wird durch ein Reinigungsmittel gemäß Patentanspruch 1 und eine Verwendung des Reinigungsmittels gemäß Patentanspruch 11 gelöst.

Insbesondere wird die Aufgabe durch ein Reinigungsmittel zur Reinigung von Extrudern und Spritzgussmaschinen gelöst, das die folgenden Komponenten aufweist:
A) wenigstens ein künstliches und/oder natürliches Mineral;
B) wenigstens eine organische Säure und/ oder wenigstens eine anorganische Base,
   wobei die organische Säure aus der Gruppe ausgewählt ist, die folgendes umfasst: Dialkylmalonsäure; aliphatische Mono-, Di- und Tricarbonsäuren, insbesondere Stearinsäure, Tartronsäure, Zitronensäure; organische Alkylsulfonsäuren und/oder organische phenylsubstituierte Sulfonsäuren; Mischungen vorgenannter Säuren; und
C) wenigstens einen Synthesekautschuk,
wobei die Komponenten A), B) und C) zunächst miteinander vollständig vermischt und in einem nachfolgenden Schritt durch Verdichten unter Wärmeeinwirkung, insbesondere Compoundieren, in ein homogenes Granulat überführt werden.

Unter Compoundieren bzw. Compoundierung wird im Rahmen dieser Erfindung ein durch Wärme-, respektive Hitzeinwirkung stattfindendes Verdichten aller Komponenten in einem Einfach- oder Doppelschneckenextruder bei Temperaturen im Bereich von 50°C bis 200°C über Raumtemperatur, d. h. im Bereich von 75°C bis 225°C, verstanden.

Überraschend wurde erfindungsgemäß gefunden, dass ein Reinigungsmittel bestehend aus einer Mischung von Mineralien mit organischen Säuren und/oder anorganischen Basen und Synthesekautschuken eine hohe Reinigungsleistung in Extrudern und Spritzgussmaschinen bewirkt ohne im Zuge der Reinigung Reinigungsmittelrückstände im Extruder oder in der Spritzgussmaschine zu hinterlassen.

Erfindungsgemäß werden die Komponenten A), B) und C) in Form von Pulvermischungen und/oder Granulaten und/oder Compounds und/oder Mischungen davon verwendet.

Bei dem erfindungsgemäßen Reinigungsmittel werden die Komponenten A), B), und C) im Gewichtsverhältnis 1 - 70 : 0,1 - 25 : 98.9 - 5 Gew.-%, im bevorzugten Fall 5 - 65 : 0,5 - 20 : 94,5 - 15 Gew.-% und im besonders bevorzugten Fall 10 - 60 : 1 - 15 : 98 - 25 Gew.-% betragen, wobei die Summe der Mischungsverhältnisse immer 100 Gew.-% ergibt.

Ein weiterer Vorteil dieser Erfindung ist, dass das compoundierte Reinigungsmittel mit jedem beliebig nachfolgend zu verarbeitenden Polymer mischbar ist, so dass der Heißkanal vor einem Polymerwechsel nicht gespült werden muss.

Die Mineralien A) gemäß einer Ausführungsform des Reinigungsmittels sind ausgewählt aus der Gruppe künstlicher und/oder natürlicher Minerale bestehend aus Talkum, Kreide, Bariumsulfat, Silikaten, Kieselsäure, Glasfasern, Glaskugeln, Aluminiumoxiden, Magnesiumhydroxid, Aluminiumhydroxid, Aluminiumnitriden, Lithiumminerale, Nanodiamanten, Nanopartikel wie z.B. Schichtsilikaten, wie beispielsweise Kaolin, Wollastonit, Bentonit und/oder Mischungen davon.

Die Mineralien A) gemäß einer Ausführungsform des Reinigungsmittels liegen in einer Korngröße von 5 µm - 250 µm, bevorzugt von 15 µm - 220 µm, besonders bevorzugt von 20 µm - 75 µm vor.

Die anorganischen Basen B) gemäß einer Ausführungsform des Reinigungsmittels sind erfindungsgemäß ausgewählt aus der Gruppe anorganischer Basen, wie Natriumcarbonat, Kaliumcarbonat, Natriumhydrogencarbonat, Kaliumhydogencarbonat und/oder Mischungen davon.

Die Synthesekautschuke C) gemäß einer Ausführungsform des Reinigungsmittels sind erfindungsgemäß ausgewählt aus der Gruppe synthetisch hergestellter Kautschuke, der thermoplastischer Styrol-Olefin-Blockcopolymere, Styrol-Ethylen-Ethylen-Propylen-Styrol-Blockcopolymere (SEEPS), Styrol-Ethylen-Butadien-Styrol-Blockcopolyme (SEBS), Styrol-Butadien-Styrol-Blockpolymere (SBS), Styrol-Isopren-Styrol-Blockpolymere (SIS), Styrol-Ethylen-Butylen-Styrol-Blockpolymere (SEBS), Styrol-Ethylen-Propylen-Sytrol-Blockpolymere (SEPS), thermoplastischer Elastomere (TPE), thermoplastischer Olefine (TPO), thermoplastischer Styrole (TPS), Ethylen-Propylen-Dien-Kautschuke (EPDM), vorwiegend als cis,cis-1,5-Cyclooctadien, exo-Dicyclopentadien, endo-Dicyclopentadien, 1,4-Hexadien, 1,3 Butadien und/ oder 5-Ethyliden-2-norbonen, aus der Gruppe der nicht-olefinischer Thermoplaste, wie thermoplastische Polyurethan-Elastomere, thermoplastische Polyetherurethan-Elastomere, thermoplastische Polyester, thermoplastische Polyesterester-Elastomere, thermoplastische Polyetherester-Elastomere, Polyetheramid-Elastomere, thermoplastische Polyamide, thermoplastische Polycarbonate, thermoplastische Polyacrylate, Acrylatkautschuke, Styrol-Acrylnitril/Acrylatkautschuke (ASA), Acrylnitril-Butadien-Styrol-Kautschuke (ABS) und/oder Acrylnitril-Butadien-aMethyl-Styrol-Kautschuke (ABaMS), Methacrylat-Butadien-Styrol (MBS), Methyl-Methacrylat-Butadien-Styrol (MMBS), Methyl-Methacrylat-Acrylnitril-Butadien-Styrol (MABS), EPDM und/ oder Ethylen-Propylen-Kautschuk (EPM) und/oder Polyolefine und/ oder Ethylen-Vinylacetat-Copolymere mit einem Vinylacetat-Gehalt von 6% bis 70% oder Mischungen davon.

Die Synthesekautschuke C) gemäß einer weiteren Ausführungsform des Reinigungsmittels weisen ein Molekulargewicht von 70.000 bis 300.000 g/mol, vorteilhafterweise eine Shore - Härte A von 35 bis 90 und nach Bedarf 5% bis 45% Weichermacheröl auf.

Ebenso können Silikonkautschuke (VMQ) und/oder Naturkautschuk (NR) allein oder in Mischung, insbesondere in Mischung mit oben genannten Substanzen, verwendet werden.

Des Weiteren wird die erfindungsgemäße Aufgabe durch die Verwendung eines Reinigungsmittels zum Reinigen von Extrudern und Spritzgießmaschinen gemäß vorstehenden Ausführungen gelöst, wobei gemäß einer bevorzugten Ausführungsform der Verwendung des Reinigungsmittels während eines Reinigungszyklus mindestens eine Stillstandszeit, bevorzugt drei Stillstandszeiten, besonders bevorzugt fünf Stillstandszeiten, jeweils für die Dauer von 1 bis 30 Minuten, bevorzugt für die Dauer von 2,5 bis 8 Minuten und besonders bevorzugt für die Dauer von 4 bis 6 Minuten, eingehalten werden.

Unter Stillstandszeit wird im Rahmen dieser Erfindung entweder eine Verringerung der Umdrehungszahl (U/min) auf einen Wert von 150 bis 100 U/min, bevorzugt 50 bis 25 U/min, besonders bevorzugt 25 bis 20 U/min. oder ein Anhalten oder ein vollständiges Ausschalten der Extruder- und Spritzgussmaschine verstanden.

Durch die Stillstandszeiten wird die Reinigungsleistung des Reinigungsmittels zusätzlich signifikant verstärkt, vor allem dann, wenn hartnäckige und/oder verfestigte, beispielsweise eingebrannte, Verschmutzungen vorliegen. Die Stillstandszeiten ermöglichen eine vollständige Ausfüllung des Schneckenkanals und/oder Heißkanals, so dass die Wirkstoffkomponenten auch bis in Hinterschneidungen, wie z.B. in einem Düsenkopf, vordringen können. Dadurch ergibt sich ein wichtiger wirtschaftlicher Vorteil durch Einsparung an Reinigungsmittel.

Nachfolgend wird die Erfindung anhand von nicht einschränkenden Ausführungsbeispielen näher beschrieben.

### Beispiel 1

In einem 100 Liter Henschel - Mischer wurden 76,55 Kg eines Synthesekautschukgemisches, bestehend aus 34,85 Kg Acrylnitril-Butadien-Styrol-Kautschuk (TEREZ^{®} ABS 1010 TR von TerHell) und 41,7 Kg Styrol-Butadien-Styrol-Blockpolymere (Europrene^{®} SOL T 166 von Polimeri Europa), 8,7 Kg Lithiumaluminiumsilikat mit einer Korngröße von 75 µm, 9,2 kg Bariumsulfat, 3,25 kg Glaskugeln mit einer Korngröße von 30 µm und 2,3 kg Tartronsäure bei ca. 500 U/min für 10 min gut miteinander gemischt. Die Mischung wurde anschließend auf einem Doppelschneckenextruder zu einem homogenen Granulat compoundiert mit einer Körngröße von durchschnittlich 3mm.

Nachfolgend wurde die Reinigungsleistung der compoundierten Reinigungsmischung auf einem Doppelschneckenextruder, vom Typ ZSK 28 von Coperion, Werner & Pfleiderer, und einer Spritzgussmaschine, mit 70mm Schneckendurchmesser von Ahrburg, getestet. Beide Maschinen wurden zuvor mit einem Masterbatch mit 50% Russanteil auf LDPE verunreinigt.

Der Extruder ZSK 28 wurde mit der oben genannten Reinigungsmischung mit einem Durchsatz von 4 Kg/ Stunde bei 195°C gespült. Die hierfür benötigte Reinigungsmischung betrug 950 Gramm. Das nachfolgend zu verarbeitende Polyamid 66 natur zeigte keine Verunreinigungen.

Dieselbe Mischung wurde auf der Spritzgussmaschine eingesetzt. Nach 18 Zyklen (Prüfplatten) war die Maschine von dem Russkonzentrat gereinigt. Das nachfolgend zu verarbeitende Polyamid 66 natur zeigte keine Verunreinigung mehr.

### Beispiel 2

In einem 100 Liter Henschel - Mischer wurden 69,5 Kg eines Synthesekautschukgemisches, bestehend aus 43,7 Kg thermoplastischem Olefin (DEXFLEX^{®} 756-68 TPE-O von LyondeIIBasell) und 25,8 Kg thermoplastischem Polyetherester-Elastomer (Arnitel^{®} EB464 TPE von DSM), 10,3 Kg Aluminiumoxid mit einer Korngröße von 80 µm, 9,7 kg Bariumsulfat, 6,2 kg Kieselsäure mit einer Korngröße von 44 µm und 4,3 kg Kaliumhydrogencarbonat bei ca.

500 U/min für 10 min gut miteinander gemischt. Die Mischung wurde anschlieβend auf einem Doppelschneckenextruder zu einem homogenen Granulat compoundiert mit einer Körngröße von durchschnittlich 3mm.

Nachfolgend wurde die Reinigungsleistung der compoundierten Reinigungsmischung auf einem Doppelschneckenextruder, vom Typ ZSK 28 von Coperion, Werner & Pfleiderer, und einer Spritzgussmaschine, mit 70mm Schneckendurchmesser von Ahrburg, getestet. Beide Maschinen wurden zuvor mit einem Masterbatch mit 50% Russanteil auf LDPE verunreinigt.

Der Extruder ZSK 28 wurde mit der oben genannten Reinigungsmischung mit einem Durchsatz von 4 Kg/ Stunde bei 250°C gespült. Die hierfür benötigte Reinigungsmischung betrug 753 Gramm. Das nachfolgend zu verarbeitende Polypropylen (PP) natur zeigte keine Verunreinigungen.

Dieselbe Mischung wurde auf der Spritzgussmaschine eingesetzt. Nach 11 Zyklen (Prüfplatten) war die Maschine von dem Russkonzentrat gereinigt. Das nachfolgend zu verarbeitende Polypropylen (PP) natur zeigte keine Verunreinigung mehr.

### Vergleichsbeispiel 1

### (gemäß EP 1 140 461 B9 Beispiel 2, entspricht WO 00/37236)

Es wurden 3 kg Reinigungsmischung entsprechend den Angaben aus EP 1 140 461 B9, Beispiel 2, Polyamid 6T/6 und Polystyrol im Mischungsverhältnis 15 : 85 auf der Spritzgussmaschine bei 220°C eingesetzt. Die Reinigungswirkung wie in EP 1 140 461 B9, Beispiel 2, konnte nicht bestätigt werden, da das Polyamid 6T/6 Granulat die Nadelverschlussdüse verstopfte und diese erst bei 300°C frei gespritzt werden konnte.

Die Tabelle I zeigt die Ergebnisse der Beispiele 3 bis 6. Diese wurden analog den Beispielen I und 2 im Henschelmischer gemischt, compoundiert und auf der ZSK 28 von Coperion Werner & Pleiderer und auf der Spritzgussmaschine von Ahrburg getestet. Beide Maschinen wurden zuvor mit einem Masterbatch mit 50% Russanteil auf LDPE verunreinigt.

**Beispiele**

| | 3 | 4 | 5 | 6 |
|---|---|---|---|---|
| Komponenten der Reinigungs- | | | | |
| mischung (Kg) | | | | |
| TPE-E* | 33,7 | | 3,7 | |
| TPE-O* | | 18,2 | 28,9 | |
| EPDM* | 23,8 | 42,9 | 28,7 | 13,2 |
| MMBS* | | | | 45,7 |
| Glaskugeln, 30µm | 8,7 | | 18,7 | 5,9 |
| Aluminiumoxid | 12,0 | 17,9 | | 20,1 |
| Bariumsulfat | 10,8 | 15,9 | 16,7 | |
| Bentonit | 9,4 | | | 10,9 |
| Tartronsäure | | 5,1 | | 4,2 |
| Kaliumhydrogencarbonat | 2,3 | | 3,3 | |
| Reinigungsleistung auf | | | | |
| ZSK 28 (Durchsatz 4Kg/h): | | | | |
| Temperatur in [°C]: | 220 | 250 | 280 | 200 |
| Reinigungsmischung in [g]: | 807 | 920 | 795 | 983 |
| Reinigungsleistung auf Spritz- | | | | |
| gussmaschine: | | | | |
| Reinigungszyklen (Platten): | 22 | 15 | 21 | 24 |
| Nachfolgendes Polymer: | SAN* | PC* | PA/PP* | PA6.6* |

- TPE-E* =: thermoplastisches Polyetherester-Elastomer; Arnitel^{®} EB464 TPE von DSM
- TPE-O* =: thermoplastisches Polyolefin-Elastomer DEXFLEX^{®} 756-68 TPO von LyondellBasell
- EPDM* =: Ethylen-Propylen-Dien-Kautschuk; G 2440 EPDM-Terpolymer, natur von LANXESS
- MMBS* =: Methyl-Methacrylat-Butadien-Styrol; Zylar^{®} 530 von Nova Chemicals Inc.
- SAN* =: Styrol-Acryl-Nitril-Kunststoff; Terez^{®} SAN 2006 G, glasklar von TerHell
- PC* =: Polycarbonat-Kunststoff; Terez^{®} PC 9005 L von TerHell
- PA/PP* =: Polyamid/Polypropylen-Kunststoff; Terez^{®} PA/PP 7200 von TerHell
- PA6.6* =: Polyamid 6.6-Kunststoff; Terez^{®} PA6.6 7600 H von TerHell

In sämtlichen Beispielen konnte gezeigt werden, dass das erfindungsgemäße Reinigungsmittel für eine Reinigung von Extrudern und Spritzgussmaschinen herkömmlichen Reinigungsmitteln gemäß dem Stand der Technik überlegen ist und zu sehr guten Reinigungsergebnissen führt.

An dieser Stelle sei darauf hingewiesen, dass alle oben beschriebenen Teile für sich alleine gesehen und in jeder Kombination als erfindungswesentlich beansprucht werden. Abänderungen hiervon sind dem Fachmann geläufig.

## Patentansprüche

1. Reinigungsmittel zur Reinigung von Extrudern und Spritzgussmaschinen das die folgenden Komponenten aufweist:
A) wenigstens ein künstliches und/oder natürliches Mineral;
B) wenigstens eine organische Säure und/ oder wenigstens eine anorganische Base,
wobei die organische Säure aus der Gruppe ausgewählt ist, die folgendes umfasst: Dialkylmalonsäure; aliphatische Mono-, Di- und Tricarbonsäuren, insbesondere Stearinsäure, Tartronsäure, Zitronensäure; organische Alkylsulfonsäuren und/oder organische phenylsubstituierte Sulfonsäuren; Mischungen vorgenannter Säuren; und
C) wenigstens einen Synthesekautschuk,
**dadurch gekennzeichnet, dass** die Komponenten A), B) und C) zunächst miteinander vollständig vermischt und in einem nachfolgenden Schritt durch Verdichten unter Wärmeeinwirkung, insbesondere Compoundieren, in ein homogenes Granulat überführt werden.

2. Reinigungsmittel nach Anspruch 1,
**dadurch gekennzeichnet, dass**
die Komponenten A), B), und C) im Gewichtsverhältnis 1 - 70 : 0,1 - 25 : 98.9 - 5 Gew.-%, im bevorzugten Fall 5 - 65 : 0,5 - 20 : 94,5 - 15 Gew.-% und im besonders bevorzugten Fall 10 - 60 : 1 - 15 : 98 - 25 Gew.-% betragen, wobei die Summe der Mischungsverhältnisse immer 100 Gew.-% ergibt.

3. Reinigungsmittel nach einem der vorhergehenden Ansprüche,
**dadurch gekennzeichnet, dass**
die Komponenten A), B) und C) in Form von Pulvermischungen und/oder Granulaten und/oder Compounds und/oder Mischungen davon verwendet.

4. Reinigungsmittel nach einem der vorhergehenden Ansprüche,
**dadurch gekennzeichnet, dass**
die Komponente A) ausgewählt aus der Gruppe künstlicher und/oder natürlicher Minerale bestehend aus Talkum, Kreide, Bariumsulfat, Silikaten, Kieselsäure, Glasfasern, Glaskugeln, Aluminiumoxiden, Magnesiumhydroxid, Aluminiumhydroxid, Aluminiumnitriden, Lithiumminerale, Nanodiamanten, Nanopartikel wie z.B.. Schichtsilikaten, wie beispielsweise Kaolin, Wollastonit, Bentonit und/ oder Mischungen davon sind.

5. Reinigungsmittel nach einem der vorhergehenden Ansprüche,
**dadurch gekennzeichnet, dass**
die Komponente A) ausgewählt aus der Gruppe künstlicher und/oder natürlicher Minerale in einer Korngröße von 5 µm - 250 µm, bevorzugt von 15 µm - 220 µm, besonders bevorzugt von 20 µm - 75 um vorliegen.

6. Reinigungsmittel nach einem der vorhergehenden Ansprüche,
**dadurch gekennzeichnet, dass**
die wenigstens eine anorganische Base aus der Gruppe ausgewählt ist, die folgendes umfasst: Natriumcarbonat, Kaliumcarbonat, Natriumhydrogencarbonat, Kaliumhydrogencarbonat und/ oder Mischungen davon.

7. Reinigungsmittel nach einem der vorhergehenden Ansprüche,
**dadurch gekennzeichnet, dass**
die Komponente C) aus der Gruppe ausgewählt ist, die folgendes umfasst:
- thermoplastische Styrol-Olefin-Blockcopolymere,
- Styrol-Ethylen-Ethylen-Propylen-Styrol-Blockcopolymere (SEEPS),
- Styrol-Ethylen-Butadien-Styrol-Blockcopolyme (SEBS),
- Styrol-Butadien-Styrol-Blockpolymere (SBS),
- Styrol-Isopren-Styrol-Blockpolymere (SIS),
- Styrol-Ethylen-Butylen-Styrol-Blockpolymere,
- Styrol-Ethylen-Propylen-Sytrol-Blockpolymere (SEPS),
- thermoplastische Elastomere (TPE),
- thermoplastischer Olefine (TPO),
- thermoplastischer Styrole (TPS),
- Ethylen-Propylen-Dien-Kautschuke (EPDM), insbesondere als cis,cis-1,5-Cyclooctadien, exo-Dicyclopentadien, endo-Dicyclopentadien, 1,4-Hexadien, 1,3 Butadien und/oder 5-Ethyliden-2-norbonen,
- nicht-olefinischer Thermoplaste, insbesondere
- thermoplastische Polyurethan-Elastomere,
- thermoplastische Polyetherurethan-Elastomere,
- thermoplastische Polyester,
- thermoplastische Polyesterester-Elastomere,
- thermoplastische Polyetherester-Elastomere,
- thermoplastische Polyetheramid-Elastomere,
- thermoplastische Polyamide,
- thermoplastische Polycarbonate,
- thermoplastische Polyacrylate,
- Acrylatkautschuke,
- Styrol-Acrylnitril/Acrylatkautschuke (ASA),
- Acrylnitril-Butadien-Styrol-Kautschuke (ABS),
- Acrylnitril-Butadien-a-Methyl-Styrol-Kautschuke (ABaMS),
- Methacrylat-Butadien-Styrol (MBS),
- Methyl-Methacrylat-Butadien-Styrol (MMBS),
- Methyl-Methacrylat-Acrylnitril-Butadien-Styrol (MABS),
- Ethylen-Propylen-Terpolymer (EPDM),
- Ethylen-Propylen-Kautschuk (EPM),
- Polyolefine,
- Ethylen-Vinylacetat-Copolymere mit einem Vinylacetat-Gehalt von 6% bis 70%,
- Silikonkautschuke (VMQ),
- Naturkautschuke (NR), und
Mischungen der vorgenannten Substanzen.

8. Reinigungsmittel nach einem der vorhergehenden Ansprüche,
**dadurch gekennzeichnet, dass**
die Komponente C) ein Molekulargewicht von 70.000 g/mol bis 300.000 g/mol hat.

9. Reinigungsmittel nach einem der vorhergehenden Ansprüche,
**dadurch gekennzeichnet, dass**
die Komponente C) eine Shore - Härte A von 35 bis 90 hat.

10. Reinigungsmittel nach einem der vorhergehenden Ansprüche,
**dadurch gekennzeichnet, dass**
die Komponente C) 5% bis 45% Weichermacheröl enthält.

11. Verwendung eines Reinigungsmittels nach einem der vorhergehenden Ansprüche 1 bis 10 zum Reinigen von Extrudern und Spritzgießmaschinen.

12. Verwendung eines Reinigungsmittels nach Anspruch 11,
**dadurch gekennzeichnet, dass**
während eines Reinigungszyklus mindestens eine Stillstandszeit, bevorzugt drei Stillstandszeiten, besonders bevorzugt fünf Stillstandszeiten, jeweils für die Dauer von 1 bis 30 Minuten, bevorzugt für die Dauer von 2,5 bis 8 Minuten und besonders bevorzugt für die Dauer von 4 bis 6 Minuten, eingehalten wird.
